Europäisches Patentamt

European Patent Office

Office européen des brevets

(11) Publication number: **0 359 883**
A1

## EUROPEAN PATENT APPLICATION

(21) Application number: 88308841.1

(22) Date of filing: 23.09.88

(51) Int. Cl.⁵: **B23D 71/04** , **B23D 73/04** , **B24D 15/04**

(43) Date of publication of application:
28.03.90 Bulletin 90/13

(84) Designated Contracting States:
AT BE CH DE ES FR GB GR IT LI LU NL SE

(71) Applicant: Ishihara, Nobuo
14-3, 2-chome, Chiyozaki Nishi-ku
Osaka(JP)

(72) Inventor: Ishihara, Nobuo
14-3, 2-chome, Chiyozaki Nishi-ku
Osaka(JP)

(74) Representative: Nash, Keith Wilfrid et al
KEITH W. NASH & Co. Pearl Assurance
House 90-92 Regent Street
Cambridge CB2 1DP(GB)

(54) **Hand files.**

(57) A hand file is made from a coiled spring, the flattened outer peripheral surface (1a') of which is coated with particles of abrasive (3) so as to form a file face (1b, 1b').

In a first arrangement of the file (A), the coiled spring having the file face coated with the abrasive particles is joined to the tip of a hand grip (2). In a second arrangement (A'), the coiled spring having the file face coated with the abrasive particles is of considerable length and thus used portions thereof can be removed by cutting or breaking off.

FIG.2

EP 0 359 883 A1

## Hand Files

### Field of the invention

The present invention relates to an improved hand file, and to a method of manufacture thereof.

### Background of the invention

The generally known hand file tools are small-sized and convenient for use and do not require large equipment; but since the file face of such a known file is formed of a rigid material, when filing or refiling parts and tools having intricately shaped surfaces to be filed, particularly a cutting face (blade face) of a spiral cutting tool (eg a spiral end mill, a spiral tap or the like), a dead space would be formed between the portion to be filed and the file face, and the file is unable to bring the file face into uniform contact with the workpiece, and therefore cannot provide good filing.

On the other hand, when filing or refiling a portion having a complicated shape, there arises the problem of requiring a skilled worker to use the file. Because of this problem, when it is desired to file machine parts and tools having complicated structural portions to be filed, it is common practice to use a special tool and grinding machine adapted for the portions to be filed. However, the use of such a special tool and machine of this type requires large-scale equipment and increases cost.

It is an object of the present invention to overcome the above mentioned problem.

Accordingly, the invention aims to provide an easy-to-operate hand file capable of uniformly filing a workpiece whose portions to be filed are complicated in shape.

The invention also aims to provide a method of manufacturing the easy-to-operate handy file.

### Summary of the invention

The spring file of the invention is embodied in various forms.

One form is a construction in which a coiled spring body having the file face formed thereon is directly applied to the end of a hand grip, the file face being formed by fixing abrasive particles to the flattened outer peripheral surface of the coiled spring.

Another form is a construction in which a file face is formed by fixing abrasive particles to the flattened outer periphery surface of a long coiled spring, and the used portions of the coiled spring are successively broken off.

### Brief description of the drawings

Preferred embodiment of the present invention will now be described, by way of example, with reference to the accompanying drawings in which:

Fig. 1 is a view of one embodiment of the present invention;

Fig. 2 is an explanatory view showing the steps in the process of making a file face in the present method;

Fig. 3 is an explanatory view showing the use of a spring file according to the present invention; and

Fig. 4 is a view of another embodiment of the present invention.

### Detailed description of the embodiments

A spring file according to the present invention has a file face formed in such a way that particles of abrasive are attached to the flattened outer peripheral surface of a coiled spring having appropriate resilience, and accordingly various modifications of the spring file are feasible.

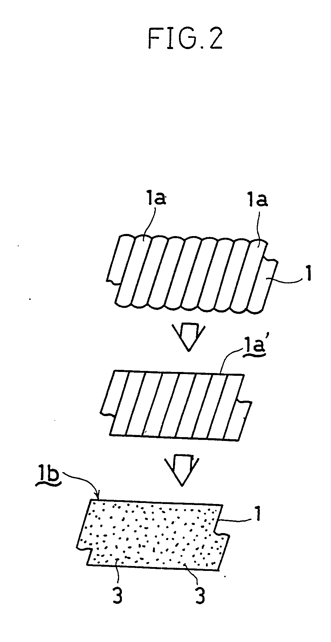

Referring first to Figure 2, according to the method of the invention, after each wave-shaped convex surface 1a of a coiled spring 1 is flattened, as shown at 1a', a file face is formed by attaching abrasive particles 3, as of diamond, to the surface 1a'.

The spring file thus formed has a file 1b having the abrasive particles attached thereto.

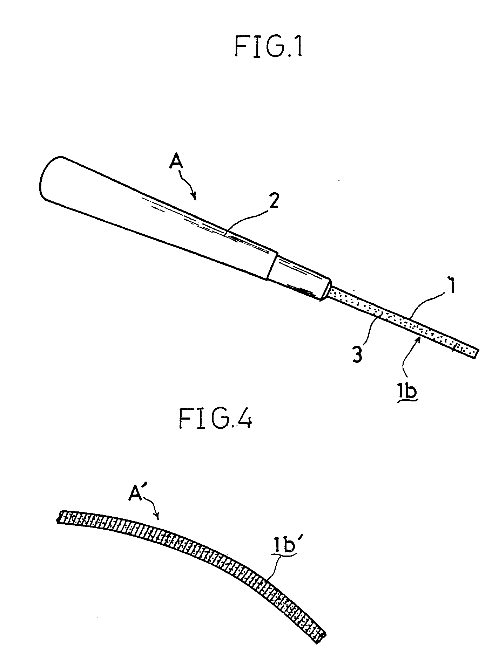

As shown in Fig. 1, held within the tip of a hand grip 2 is a file body 1 of coiled spring having appropriate resilience.

The body 1 has a file face 1b formed in such a way that surface particles of abrasive 3, eg of diamond, are fixedly attached to the entire flattened outer peripheral surface of the coiled spring body.

The file face 1b in this embodiment can simply be formed by such a method that each wave-shaped convex portion 1a of the surface of the body 1 is flattened so as to form a cylindrical surface 1a' to which the particles of diamond 3 are electrically attached in the following process, as shown in Fig. 2. The particles employed in the present invention may be of artificial diamonds.

Particularly in this embodiment, the entire flattened outer peripheral surface of the body 1 constitutes the file face 1b, thus facilitating filing operations.

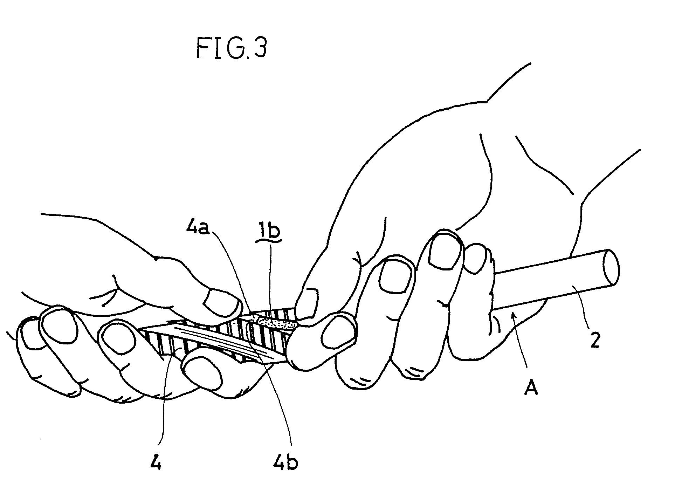

Fig. 3 shows the use of a spring file A according to the present invention, in which a machine cutting tool such as an end mill 4 is being filed with the spring file A which works with its file face 1b moving on and along the blade face 4b formed in a spiral groove 4a of the end mill 4.

It will be understood that appropriate abrasive particles such as borazon, carborundum, or the like can selectively be employed in relation to the use of a spring file, and adapted to complete the file face 1b when coated therewith, eg by means of adhesive. Thus the spring file can be positively utilized for filing of metal, wood, or other materials.

Fig. 4 shows another embodiment of the present invention.

Here a file A′, as distinguished from the file A shown in Fig. 1, comprises a coiled spring of considerable length, the flattened outer periphery of which is coated with particles of abrasive.

The advantage of this embodiment is that every used portion of a file face 1b′ of the spring file A′ can be successively removed by cutting or breaking off, when its use has been finished.

According to the spring file of the present invention, its coiled spring representing a file face is available in variety of cross-sectional shapes, for example: round (as illustrated), triangular, square, oval, etc.

It is apparent from the above description that the spring file of the present invention has its file face formed on a coiled spring which has appropriate resilience so that it can be flexible to correspond to the configuration of a surface to be filed.

This allows the file face to come into even contact with a larger part of the surface to be filed, and thus an unskilled worker can in practice consistently and correctly carry out filing operations, ie without excess or deficiency.

Additionally, because of this advantageous arrangement, the spring file can be of great utility and used for any purpose in filing, with no need for a specially made instrument which is so arranged to corrspond to a particular shape of a surface to be filed.

## Claims

1. A hand file (A, A′) having a file face (1b, 1b′), characterized in that the file face is formed by coating the flattened surface (1a′) of the body (1) of a coiled spring with abrasive particles (3).

2. A file as claimed in claim 1, characterized in that the body (1) of the coiled spring, having the file face (1b) formed thereon, is directly held in the tip of a hand grip (2).

3. A file as claimed in claim 1, characterized in that the coiled spring is of considerable length having the file face (1b′) coated with the abrasive particles (3), and in that in use the used portions of the body (1) of the coiled spring are capable of being successively broken off.

4. A file as claimed in any one preceding claim, characterized in that the body (1) of the coiled spring is generally rounded in cross-section.

5. A method of manufacturing a hand file (A, A′) characterized by the steps of:

(i) flattening the wave-shaped convex outer peripheral surface of a coiled spring; and

(ii) attaching abrasive particles to the flattened surface so as to form the file face.

EP 0 359 883 A1

FIG.1

A

2

1

3

1b

FIG.4

A'

1b'

# FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | DE-A-2 950 591 (ROBERT BOSCH) <br> * Whole document * <br>--- | 1-5 | B 23 D 71/04 <br> B 23 D 73/04 <br> B 24 D 15/04 |
| Y | US-A-2 687 561 (W.M. ANDERSON) <br> * Whole document * <br>--- | 1-5 | |
| Y | FR-A- 658 818 (A. POULLIN) <br> * Whole document * <br>--- | 1,3-5 | |
| Y | PATENT ABSTRACTS OF JAPAN, vol. 12, no. 419 (M-760)[3266], 8th November 1988; & JP-A-63 156 614 (TOSHIBA CERAMICS CO. LTD) 29-06-1988 <br> * Abstract * <br>--- | 2 | |
| A | US-A-3 956 858 (R.T. CATLIN et al.) <br> * Abstract; figures * <br>--- | 1-5 | |
| A | US-A-3 774 355 (C.H. DAWSON et al.) <br> * Abstract; figures * <br>--- | 1-5 | |
| A | US-A-2 309 456 (W.S. HOSKIN) <br> * Claims; figures * <br>--- | 1,5 | **TECHNICAL FIELDS SEARCHED (Int. Cl.3)** <br><br> B 23 D <br> B 24 D |
| A | US-A-2 714 790 (E.R. LINDENBORG) <br> * Claims; figures * <br>----- | 1,5 | |

The present search report has been drawn up for all claims

| Place of search | Date of completion of the search | Examiner |
|---|---|---|
| THE HAGUE | 23-05-1989 | VOUTSADOPOULOS C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)